# EUROPEAN PATENT SPECIFICATION

(11) **EP 2 784 144 B1**
(45) Date of publication and mention of the grant of the patent: **02.01.2019**
(21) Application number: 14162279.5
(22) Date of filing: 28.03.2014
(51) Int. Cl.: C09K 21/02, H01B 7/295, C08L 23/08, C08K 3/22

(54) **Halogen- and phosphorus-free flame-retardant insulated wire and halogen- and phosphorus-free flame-retardant insulated cable**
Halogen- und phosphorfreier, flammhemmender Isolierdraht und halogen- und phosphorfreies, flammhemmendes Isolierkabel
Fil isolé ignifuge exempt d'halogène et de phosphore et câble isolé ignifuge exempt d'halogène et de phosphore

(30) Priority: 29.03.2013 JP 2013071172
(43) Date of publication of application: 01.10.2014
(73) Proprietor: HITACHI METALS, LTD., Minato-ku, Tokyo 105-8614 (JP)
(72) Inventor: Kimura, Hitoshi, Minato-ku, Tokyo 105-8614 (JP); Kajiyama, Motoharu, Minato-ku, Tokyo 105-8614 (JP)
(74) Representative: Gill, David Alan

(56) References cited:
- WO-A1-2008/078406
- DE-T5-112005 003 234
- US-A- 5 159 006
- US-A- 5 317 051
- US-A- 5 561 185
- US-A1- 2009 238 957
- US-A1- 2013 240 239

## Description

The invention relates to a halogen- and phosphorus-free flame-retardant insulated wire and a halogen- and phosphorus-free flame-retardant insulated cable and which, in particular can have high flame retardancy meeting various flame retardant standards (such as for example EN, DIN, BS), are excellent in mechanical characteristics, and can have a smooth appearance after extrusion.

In recent years, halogen-free flame-retardant wires and cables not using polyvinyl chloride or halogen-based flame retardants for the purpose of reducing environmental load have spread rapidly as so-called eco-friendly wire/cable.

In such halogen-free flame-retardant wires and cables, an insulation of the wire is generally formed of a resin composition in which a large amount of halogen-free flame-retardant such as magnesium hydroxide is mixed to polyolefin.

In order to realize high flame retardancy which allows products to pass a vertical flame test to meet various international flame retardant standards (EN, DIN, BS) while using a halogen-free flame retardant such as magnesium hydroxide, it is necessary to mix a large amount of the halogen-free flame retardant and this causes a problem of a significant decrease in mechanical characteristics such as tensile strength and elongation.

A method to solve such a problem uses a polyolefin, a base polymer, which is polymerized by a metallocene catalyst, has a narrow molecular weight distribution and is strong and flexible, and such as for example known from JP-A-2009-19190.

While such known method is advantageous in that mechanical characteristics are less likely to decrease even when a large amount of halogen-free flame retardant is mixed to the base polymer, there are still limitations and potential for further improvement remains.

That is, although it is desirable to increase an extrusion rate of a resin composition in order to reduce the manufacturing cost, significant melt fractures tend to occur when a polymer having a narrow molecular weight distribution such as the polyolefin polymerized by a metallocene catalyst is extrusion-molded and this may impair the appearance after extrusion.

Meanwhile, there is a method in which a flame retardant aid such as red phosphorus is added to reduce the amount of halogen-free flame retardant. However, in recent years, there is a tendency to avoid use of red phosphorus since there are concerns that hazardous phosphine is produced when burning and phosphoric acid is produced when discarded and with a danger of contamination of underground water sources/supplies.

Known wires and cables therefore still exhibit various disadvantages.

Various forms of flame retardant compositions, and fire resistant cable coatings and sheaths are known from US 2009/238957, US 5 159 006, US 5 561 185, DE 11 2005 003234, WO 2008/078406, US 2013/240239 and US 5 317 051

The invention seeks to provide for flame-retardant wires and cables having advantages over known such wires and cables.

It is a particular object of the invention to provide a halogen- and phosphorus-free flame-retardant insulated wire and a halogen- and phosphorus-free flame-retardant insulated cable which have one or more of a high flame retardancy meeting one or more of various flame-retardant standards (e.g. EN, DIN, BS), attractive mechanical characteristics, and a smooth appearance after extrusion.

It is particularly desirable to develop halogen- and phosphorus-free flame-retardant wires and cables which are excellent in flame retardancy.

According to one aspect of the invention, there is provided a halogen- and phosphorus-free flame-retardant insulated wire, comprising:
a conductor;
an insulation layer formed by covering an outer periphery of the conductor with a halogen- and phosphorus-free flame-retardant resin composition comprising, not less than 50wt% with respect to a polymer, a copolymer of ethylene and α-olefin;
wherein the insulation layer has a surface roughness value Ra of not more than 1.5µm and allows the wire to pass a vertical flame test in accordance with EN60332-1-2;
wherein the halogen- and phosphorus-free flame-retardant resin composition includes ethylene propylene copolymer modified with maleic acid, and not less than 1 part by weight and not more than 20 parts by weight of mineral oil with 100 parts by weight of a base polymer including not less than 5wt% and not more than 30wt% of ethylene-vinyl acetate copolymer that has a vinyl acetate content of not less than 40%, and also includes not less than 100 parts by weight and not more than 250 parts by weight of metal hydroxide and the ethylene-vinyl acetate copolymer has a melt flow rate of not less than 50g/min; and
wherein the copolymer of ethylene and α-olefin is polymerized by a metallocene catalyst and is selected from the group consisting of ethylene propylene copolymer, ethylene butene copolymer, and ethylene octene copolymer.

According to another aspect of the present invention, there is provided an insulated cable according to Claim 2.

According to one embodiment of the invention, a halogen- and phosphorus-free flame-retardant insulated wire and a halogen- and phosphorus-free flame-retardant insulated cable can be provided which have high flame retardancy meeting various, i.e. overseas, flame-retardant standards (such as EN, DIN, BS), that have attractive, and in particular excellent, mechanical characteristics, and that have a smooth appearance after extrusion.

The invention is described further hereinafter, by way of example only, with reference to the accompanying drawings in which:
**FIG.1** is a cross sectional view showing a halogen- and phosphorus-free flame-retardant insulated wire according to an embodiment of the present invention; and
**FIG.2** is a cross sectional view showing a halogen- and phosphorus-free flame-retardant insulated cable according to another embodiment of the invention.

The illustrated embodiment of the invention provides a halogen- and phosphorus-free flame-retardant insulated wire provided with a conductor and an insulation layer formed by covering an outer periphery of the conductor with a halogen- and phosphorus-free flame-retardant resin composition of which main component is a copolymer of ethylene and α-olefin polymerized by a metallocene catalyst, wherein the insulation layer has a surface roughness value Ra of not more than **1.5** µm and allows the wire to pass a vertical flame test in accordance with EN **60332-1-2.** It should be noted that the main component here is a component making up not less than **50** wt% with respect to a polymer.

The invention is advantageous in providing for a halogen- and phosphorus-free flame-retardant insulated wire having a smooth appearance even though a copolymer of ethylene and α-olefin polymerized by a metallocene catalyst is used as a main component and a flame retardant is mixed in a large amount to pass a vertical flame test such as in accordance with EN **60332-1-2.**

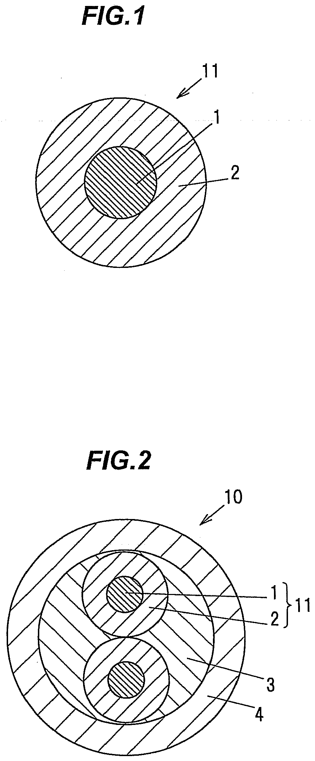

**FIG.1** is a cross sectional view for explaining an embodiment of the invention and shows an example of the structure of the halogen- and phosphorus-free flame-retardant insulated wire.

A halogen- and phosphorus-free flame-retardant insulated wire **11** has a structure in which an insulation layer **2** is provided on an outer periphery of a conductor **1.** As a material of the conductor **1,** it is possible to use, e.g., copper or a copper alloy, etc., but it is not specifically limited as long as it is a conductive material. A material of the insulation layer **2** is a halogen- and phosphorus-free flame-retardant resin composition described below.

**FIG.2** is a cross sectional view showing an exemplary embodiment of the halogen- and phosphorus-free flame-retardant insulated cable in the invention.

As shown in **FIG.2****,** a halogen- and phosphorus-free flame-retardant insulated cable **10** is configured such that a core is formed by twisting two parallel paired halogen- and phosphorus-free flame-retardant insulated wires **11** together with an inclusion **3** and an outer periphery of the core is covered with a cable sheath **4** formed of the halogen- and phosphorus-free flame-retardant resin composition described below. The inclusion **3** is formed of, e.g., polypropylene.

Components of the halogen- and phosphorus-free flame-retardant resin composition which allows the insulation layer to have a surface roughness value Ra of not more than **1.5** µm and to pass a vertical flame test in accordance with EN **60332-1-2** will be described as an example even though it is not limited thereto.

A base polymer of the halogen- and phosphorus-free flame-retardant resin composition can advantageously comprise a polymer composed of a copolymer of ethylene and α-olefin having a carbon number of **3** to **8** polymerized by a metallocene catalyst and a ethylene-vinyl acetate copolymer that has a melt flow rate of not less than **50** g/min and a vinyl acetate content of not less than **40**%.

As the copolymer of ethylene and α-olefin having a carbon number of **3** to **8,** it is possible to use, e.g., ethylene propylene copolymer, ethylene butene copolymer, ethylene hexene copolymer and ethylene octene copolymer, etc.

Examples of the α-olefin having a carbon number of **3** to **8** includes propylene, **1**-butene, **4**-methyl-**1**-pentene, **1**-hexene and **1**-octene, etc. Of those, **1**-butene and **1**-octene are particularly exemplary.

In addition, the ethylene/α-olefin copolymer and the ethylene-vinyl acetate copolymer which constitute the base polymer used in the invention are blended such that the ethylene/α-olefin copolymer is included as a main component of the entire base polymer and the ethylene-vinyl acetate copolymer is included in an amount of not less than **5** wt% and not more than **30** wt% of with respect to the entire base polymer.

While the ethylene/α-olefin copolymer isincluded as a main component of the entire base polymer and the ethylene-vinyl acetate copolymer is included in an amount of and not less than **5** wt% and not more than **30** wt% of with respect to the entire base polymer, a resin composition in which other polymers are further blended can be also used as long as the effects of the invention are exerted. It is possible to blend, e.g., polyethylene (LLDPE), ethylene-based copolymer (EVA, EEA, etc.) and EP rubber, etc.

In one example of the invention, a metal hydroxide can be added to the base polymer. The reason for adding the metal hydroxide is to impart further flame retardancy to the base polymer.

As the metal hydroxide, it is possible to use, e.g., magnesium hydroxide, aluminum hydroxide and calcium hydroxide, etc. Such flame retardants are desirably used after surface treatment by a known method using a silane coupling agent such as vinyltriethoxysilane, vinyl tris(β-methoxyethoxy)silane or aminosilane; a fatty acid such as stearic acid or oleic acid, and titanate, etc.

The total amount of the metal hydroxide mixed is preferably not less than **100** parts by weight not more than **250** parts by weight per **100** parts by weight of the base polymer. The range of not less than **150** parts by weight not more than **200** parts by weight is more preferable.

The inclusion of mineral oil further reduces load on an extruder during extrusion and to provide a smooth appearance after extrusion.

The mineral oil used in the invention can comprise for example rubber process oil and it is possible to use one of paraffinic oil, napthenic oil and aromatic oil or a combination of two or more thereof. The paraffinic oil is especially exemplary due to its high compatibility with the ethylene/α-olefin copolymer.

The total amount of the mineral oil mixed is not less than **1** part by weight not more than **20** parts by weight per **100** parts by weight of the base polymer.

It should be noted that, depending on the intended use, the halogen- and phosphorus-free flame-retardant insulated wire and the halogen- and phosphorus-free flame-retardant insulated cable may be exposed to electron beam or ultraviolet light, etc., or may be cross-linked by a known method using an organic peroxide.

In an example of the invention, crosslinking aids, flame-retardant aids, antioxidants, lubricants, stabilizers, fillers, colorants and silicone, etc., can be added in addition to the components listed above.

In addition, the halogen- and phosphorus-free flame-retardant insulated cable **10** in the present embodiment has the cable sheath **4** formed of the same resin composition as the insulation layer **2** of the halogen- and phosphorus-free flame-retardant insulated wire **11** and thus has the same effects as the halogen- and phosphorus-free flame-retardant insulated wire **11.**

Although the halogen- and phosphorus-free flame-retardant insulated cable **10** shown in **FIG.2** is configured such that the insulation layer **2** and the cable sheath **4** are both formed of the halogen- and phosphorus-free flame-retardant resin composition described above, the halogen- and phosphorus-free flame-retardant insulated cable **10** of the invention may be configured such that only the cable sheath **4** is formed of the resin composition described above.

The halogen- and phosphorus-free flame-retardant resin composition constituting the insulation layer **2** and the cable sheath **4** is also applicable to, e.g., a protective layer, etc., of a flat cable in addition to wires and cables having a circular sectional shape, or wires/cables of any other shape.

Embodiments of the invention will now be described based on various numbered examples and with particular reference to the components listed in Table 1 below and that were introduced into and kneaded in an **8** inch-open roll maintained at **100** to **130**°C. After kneading, using a **40** mm extruder (L/D=**24**) maintained at **100**°C, the mixture was extruded on a copper wire formed by twisting seven **0.26** mm-diameter single wires so as to have a thickness of **1.0** mm. Subsequently, the coated wire was introduced into and cross-linked in a steam vulcanizer at **12** atmospheres for **3** minutes, thereby making a halogen-free flame-retardant wire (sample).

Each sample was evaluated as follows.

### (1) Flame retardancy

A vertical flame test in accordance with EN **60332-1-2** was conducted on the samples and flame retardancy was evaluated. As for evaluation criteria, samples self-extinguished within **1** minute were evaluated as "acceptable (○)" and samples kept burning more than **1** minute were evaluated as "unacceptable (×)".

### (2) Tensile characteristics

A tensile test in accordance with JIS C**3005** was conducted on each tube obtained by pulling the conductor out of the sample. The tensile speed was **200** mm/min. The targets of tensile strength and elongation rate were respectively not less than **10** MPa and not less than **350**%.

### (3) Appearance after extrusion

Extrusion was carried out at an extrusion rate of **40** m/min while slightly pulling down and the surface condition of the sample was measured using a surface roughness meter. The Ra value of not more than **1.5** µm was evaluated as "acceptable (○)" and the Ra value of more than **1.5** µm was evaluated as "unacceptable (×)".

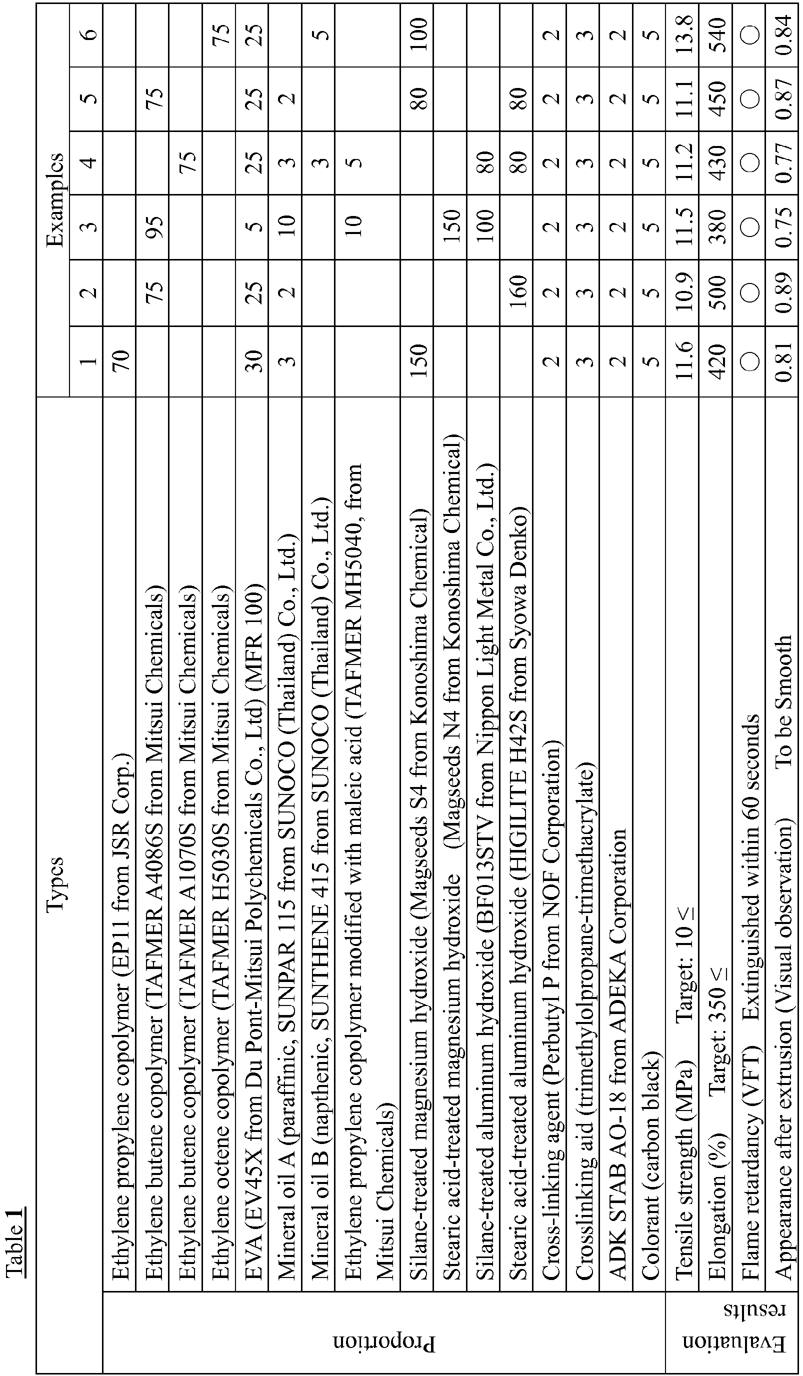

As shown in Table **1,** all of Examples **1** to **6** of the invention passed the vertical flame test and have good tensile characteristics and appearance after extrusion.

The invention is not restricted to the details of the foregoing embodiment.

## Claims

1. A halogen- and phosphorus-free flame-retardant insulated wire, comprising:
a conductor;
an insulation layer formed by covering an outer periphery of the conductor with a halogen- and phosphorus-free flame-retardant resin composition comprising, not less than 50wt% with respect to a polymer, a copolymer of ethylene and α-olefin;
wherein the insulation layer has a surface roughness value Ra of not more than 1.5µm and allows the wire to pass a vertical flame test in accordance with EN60332-1-2;
wherein the halogen- and phosphorus-free flame-retardant resin composition includes ethylene propylene copolymer modified with maleic acid, and not less than 1 part by weight and not more than 20 parts by weight of mineral oil with 100 parts by weight of a base polymer including not less than 5wt% and not more than 30wt% of ethylene-vinyl acetate copolymer that has a vinyl acetate content of not less than 40%, and also includes not less than 100 parts by weight and not more than 250 parts by weight of metal hydroxide and the ethylene-vinyl acetate copolymer has a melt flow rate of not less than 50g/min; and
wherein the copolymer of ethylene and α-olefin is polymerized by a metallocene catalyst and is selected from the group consisting of ethylene propylene copolymer, ethylene butene copolymer, and ethylene octene copolymer.

2. A halogen- and phosphorus-free flame-retardant insulated cable, comprising:
insulated wires each comprising a conductor and an insulation layer formed on an outer periphery of the conductor;
a sheath layer formed by covering an outer periphery thereof with a halogen- and
phosphorus-free flame-retardant resin composition comprising, not less than 50wt% with respect to a polymer, a copolymer of ethylene and α-olefin;
wherein the sheath layer has a surface roughness value Ra of not more than 1.5µm and allows the cable to pass a vertical flame test in accordance with EN60332-1-2;
wherein the halogen- and phosphorus-free flame-retardant resin composition includes ethylene propylene copolymer modified with maleic acid, and not less than 1 part by weight and not more than 20 parts by weight of mineral oil with 100 parts by weight of a base polymer including not less than 5wt% and not more than 30wt% of ethylene-vinyl acetate copolymer that has a vinyl acetate content of not less than 40%, and also includes not less than 100 parts by weight and not more than 250 parts by weight of metal hydroxide and the ethylene-vinyl acetate copolymer has a melt flow rate of not less than 50g/min; and
wherein the copolymer of ethylene and α-olefin is polymerized by a metallocene catalyst and is selected from the group consisting of ethylene propylene copolymer, ethylene butene copolymer, and ethylene octene copolymer.

3. An insulated cable according to Claim 2, wherein at least one of the said insulated wires comprises a wire as claimed in Claim 1.

## Patentansprüche

1. Halogen- und phosphorfreier flammwidriger isolierter Draht, der Folgendes umfasst:
einen Leiter;
eine Isolationsschicht, die durch Bedecken eines äußeren Umfangs des Leiters mit einer halogen- und phosphorfreien flammwidrigen Harzzusammensetzung gebildet wird, die nicht weniger als 50 Gew.-%, bezogen auf ein Polymer, eines Copolymers aus Ethylen und α-Olefin umfasst;
wobei die Isolationsschicht einen Oberflächenrauheitswert Ra von nicht größer als 1,5 µm aufweist und ermöglicht, dass der Draht einen vertikalen Flammtest gemäß EN60332-1-2 besteht;
wobei die halogen- und phosphorfreie flammwidrige Harzzusammensetzung Folgendes einschließt: Ethylen-Propylen-Copolymer, das mit Maleinsäure modifiziert ist, und nicht weniger als 1 Gewichtsteil und nicht mehr als 20 Gewichtsteile an Mineralöl mit 100 Gewichtsteilen eines Basispolymers, das nicht weniger als 5 Gew.-% und nicht mehr als 30 Gew.-% Ethylen-Vinylacetat-Copolymer einschließt, das einen Gehalt an Vinylacetat von nicht weniger als 40 % aufweist, und auch nicht weniger als 100 Gewichtsteile und nicht mehr als 250 Gewichtsteile an Metallhydroxid einschließt, und das Ethylen-Vinylacetat-Copolymer eine Schmelzflussrate von nicht kleiner als 50 g/min aufweist; und
wobei das Copolymer aus Ethylen und α-Olefin durch einen Metallocen-Katalysator polymerisiert wird und aus der Gruppe ausgewählt ist, die aus Ethylen-Propylen-Copolymer, Ethylen-Buten-Copolymer und Ethylen-Octen-Copolymer besteht.

2. Halogen- und phosphorfreies flammwidriges isoliertes Kabel, das Folgendes umfasst:
isolierte Drähte, die jeweils einen Leiter und eine Isolationsschicht, die auf einem äußeren Umfang des Leiters ausgebildet ist, umfassen;
eine Ummantelungsschicht, die durch Bedecken eines äußeren Umfangs davon mit einer halogen- und phosphorfreien flammwidrigen Harzzusammensetzung gebildet wird, die nicht weniger als 50 Gew.-%, bezogen auf ein Polymer, eines Copolymers aus Ethylen und α-Olefin umfasst;
wobei die Ummantelungsschicht einen Oberflächenrauheitswert Ra von nicht größer als 1,5 µm aufweist und ermöglicht, dass das Kabel einen vertikalen Flammtest gemäß EN60332-1-2 besteht;
wobei die halogen- und phosphorfreie flammwidrige Harzzusammensetzung Folgendes einschließt: Ethylen-Propylen-Copolymer, das mit Maleinsäure modifiziert ist, und nicht weniger als 1 Gewichtsteil und nicht mehr als 20 Gewichtsteile an Mineralöl mit 100 Gewichtsteilen eines Basispolymers, das nicht weniger als 5 Gew.-% und nicht mehr als 30 Gew.-% Ethylen-Vinylacetat-Copolymer einschließt, das einen Gehalt an Vinylacetat von nicht weniger als 40 % aufweist, und auch nicht weniger als 100 Gewichtsteile und nicht mehr als 250 Gewichtsteile an Metallhydroxid einschließt, und das Ethylen-Vinylacetat-Copolymer eine Schmelzflussrate von nicht kleiner als 50 g/min aufweist; und
wobei das Copolymer aus Ethylen und α-Olefin durch einen Metallocen-Katalysator polymerisiert wird und aus der Gruppe ausgewählt ist, die aus Ethylen-Propylen-Copolymer, Ethylen-Buten-Copolymer und Ethylen-Octen-Copolymer besteht.

3. Isoliertes Kabel nach Anspruch 2, wobei mindestens einer der isolierten Drähte einen Draht nach Anspruch 1 umfasst.

## Revendications

1. Fil isolé ignifuge exempt d'halogène et de phosphore, comprenant :
un conducteur ;
une couche d'isolation formée par recouvrement d'une périphérie externe du conducteur par une composition de résine ignifuge exempte d'halogène et de phosphore comprenant pas moins de 50 % en poids par rapport à un polymère, d'un copolymère d'éthylène et d'α-oléfine ;
dans lequel la couche d'isolation a une valeur de rugosité de surface Ra de pas plus de 1,5 µm et permet au fil de réussir un essai de flamme à la verticale conformément à la norme EN60332-1-2 ;
dans lequel la composition de résine ignifuge exempte d'halogène et de phosphore comporte un copolymère d'éthylène et de propylène modifié par l'acide maléique, et pas moins de 1 partie en poids et pas plus de 20 parties en poids d'huile minérale, 100 parties en poids d'un polymère de base comportant pas moins de 5 % en poids et pas plus de 30 % en poids de copolymère d'éthylène et d'acétate de vinyle qui a une teneur en acétate de vinyle de pas moins de 40 %, et comporte également pas moins de 100 parties en poids et pas plus de 250 parties en poids d'hydroxyde métallique et le copolymère d'éthylène et d'acétate de vinyle a un indice de fluidité à chaud de pas moins de 50 g/min ; et
dans lequel le copolymère d'éthylène et d'α-oléfine est polymérisé par un catalyseur métallocène et est choisi dans le groupe constitué par un copolymère d'éthylène et de propylène, un copolymère d'éthylène et de butène, et un copolymère d'éthylène et d'octène.

2. Câble isolé ignifuge exempt d'halogène et de phosphore, comprenant :
des fils isolés comprenant chacun un conducteur et une couche d'isolation formée sur une périphérie externe du conducteur ;
une couche de gaine formée par recouvrement d'une périphérie externe de ceux-ci par une composition de résine ignifuge exempte d'halogène et de phosphore comprenant pas moins de 50 % en poids par rapport à un polymère, d'un copolymère d'éthylène et d'α-oléfine ;
dans lequel la couche de gaine a une valeur de rugosité de surface Ra de pas plus de 1,5 µm et permet au câble de réussir un essai de flamme à la verticale conformément à la norme EN60332-1-2 ;
dans lequel la composition de résine ignifuge exempte d'halogène et de phosphore comporte un copolymère d'éthylène et de propylène modifié par l'acide maléique, et pas moins de 1 partie en poids et pas plus de 20 parties en poids d'huile minérale, 100 parties en poids d'un polymère de base comportant pas moins de 5 % en poids et pas plus de 30 % en poids de copolymère d'éthylène et d'acétate de vinyle qui a une teneur en acétate de vinyle de pas moins de 40 %, et comporte également pas moins de 100 parties en poids et pas plus de 250 parties en poids d'hydroxyde métallique et le copolymère d'éthylène et d'acétate de vinyle a un indice de fluidité à chaud de pas moins de 50 g/min ; et
dans lequel le copolymère d'éthylène et d'α-oléfme est polymérisé par un catalyseur métallocène et est choisi dans le groupe constitué par un copolymère d'éthylène et de propylène, un copolymère d'éthylène et de butène, et un copolymère d'éthylène et d'octène.

3. Câble isolé selon la revendication 2, dans lequel au moins l'un desdits fils isolés comprend un fil tel que revendiqué dans la revendication 1.
